**Europäisches Patentamt**

**European Patent Office**

**Office européen des brevets**

(19)

(11) Veröffentlichungsnummer : **0 346 592 B1**

## (12) EUROPÄISCHE PATENTSCHRIFT

(45) Veröffentlichungstag der Patentschrift :
04.12.91 Patentblatt 91/49

(51) Int. Cl.⁵ : **B60K 28/16, B60K 31/08**

(21) Anmeldenummer : 89106957.7

(22) Anmeldetag : 19.04.89

(54) Antriebsschlupfregel- und Fahrgeschwindigkeitsbegrenzungs-Einrichtung.

(30) Priorität : 16.12.88 DE 3842348
16.06.88 DE 3820468

(43) Veröffentlichungstag der Anmeldung :
20.12.89 Patentblatt 89/51

(45) Bekanntmachung des Hinweises auf die
Patenterteilung :
04.12.91 Patentblatt 91/49

(84) Benannte Vertragsstaaten :
AT DE ES FR GB IT SE

(56) Entgegenhaltungen :
EP-A- 0 020 860
DE-A- 3 544 294
DE-A- 3 619 409
DE-A- 3 623 491
DE-A- 3 636 417
WABCO-DRUCKSCHRIFT "Das integrierte Si-
cherheits-system für Nutzfahrzeuge. Anti-
Blockier-System ABS mit Antriebsschlupfregelung ASR", Ausgabe März 1989

(73) Patentinhaber : WABCO Westinghouse
Fahrzeugbremsen GmbH
Am Lindener Hafen 21 Postfach 91 12 80
W-3000 Hannover 91 (DE)

(72) Erfinder : Feldmann, Joachim Ing. (grad.)
Auf dem Papenberg 8
W-3057 Neustadt 2 (DE)
Erfinder : Petersen, Erwin Dr.-Ing.
Fliederweg 22
W-3050 Wunstorf 1 (DE)

(74) Vertreter : Schrödter, Manfred
WABCO Westinghouse Fahrzeugbremsen
GmbH Am Lindener Hafen 21 Postfach 91 12
80
W-3000 Hannover 91 (DE)

EP 0 346 592 B1

**Beschreibung**

Die Erfindung betrifft eine Antriebsschlupfregel- und Fahrgeschwindigkeitsbegrenzungs-Einrichtung gemäß dem Oberbegriff des Patentanspruchs 1.

Eine derartige Einrichtung ist aus Abb. 21 der WABCO-Druckschrift "Das integrierte Sicherheitssystem für Nutzfahrzeuge. Anti-Blockier-System ABS mit Antriebs-Schlupf-Regelung ASR", Ausgabe März 1987, bekannt. Als Ventileinrichtung ist dort eine Kombination von elektrisch betätigten sogenannten Wegeventilen vorgesehen, d.h. solchen, die nur die Betriebszustände "voll auf" und "voll zu" ermöglichen. Um dennoch eine komfortable Antriebsschlupfregelung zu gewährleisten, ist dem dieser Funktion zugeordneten Wegeventil (dort 10) ein System aus Blenden und Zusatzvolumina vor- bzw. nachgeschaltet. Dieses System muß auf die Erfordernisse verschiedener Fahrzeugtypen speziell abgestimmt werden. Die Adaption der bekannten Antriebsschlupfregel- und Fahrgeschwindigkeitsbegrenzungs-Einrichtung an verschiedene Fahrzeugtypen bzw. an Neu- bzw. Weiterentwicklungen solcher kann im Einzelfall daher umständlich und aufwendig sein.

Der Erfindung liegt deshalb die Aufgabe zugrunde, eine Antriebsschlupfregel- und Fahrgeschwindigkeitsbegrenzungs-Einrichtung der eingangs genannten Art mit einfachen Mitteln an unterschiedliche Fahrzeugtypen adaptierbar zu machen.

Diese Aufgabe wird durch die im Patentanspruch 1 angegebene Erfindung gelöst. Vorteilhafte Ausgestaltungen und Kombinationsmöglichkeiten mit anderen Systemen des Fahrzeugs sind in den Unteransprüchen angegeben.

Die Erfindung ermöglicht im Vergleich mit der bekannten Einrichtung eine Vereinfachung, indem sie den Aufwand für die Ventileinrichtung erheblich einschränkt. Besteht dort die Ventileinrichtung aus einem Wegeventil für die Antriebsschlupfregelung und zwei Wegeventilen für die Fahrgeschwindigkeitsbegrenzung, insgesamt also aus drei einzelnen Ventileinrichtungen, so ersetzt die Erfindung diese durch eine einzelne, insgesamt wesentlich billigere, Ventileinrichtung.

Eine weitere Vereinfachung bringt der Entfall des Systems aus Blenden und Zusatzvolumina mit sich.

Weitere Vorteile der Erfindung werden in deren folgender Erläuterung anhand von in Zeichnungen dargestellten Ausführungsbeispielen genannt. In den Zeichnungen werden für Bestandteile mit gleichen Funktionen durchgehend gleiche Bezugszeichen und für elektrische Verbindungen durchgehend strichpunktierte Linien verwendet.

Es zeigen :

**Fig. 1**    schematisch eine Kombination aus einer Antriebsschlupfregel- und Fahrgeschwindigkeitsbegrenzungs-Einrichtung und anderen Teilen eines Fahrzeugsystems,

**Fig. 2**    schematisch die Kombination nach Figur 1 in einer anderen Ausgestaltung,

**Fig. 3**    eine andere Ausgestaltung der Kombination nach Fig. 2,

**Fig. 4**    schematisch eine Kombination mit Elementen aus den Fig. 1 und 2.

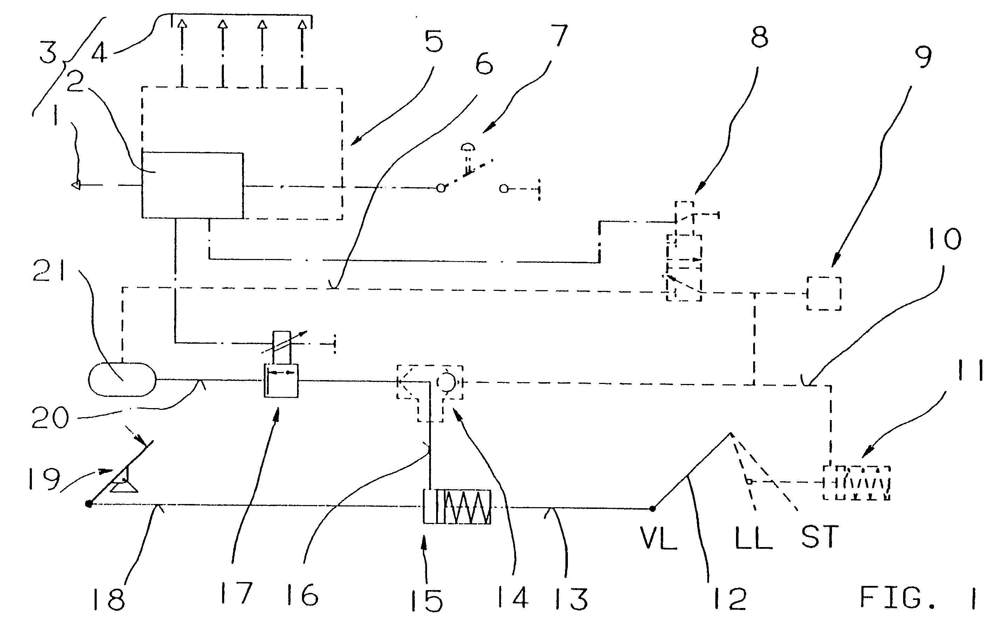

In Fig. 1 stellen ein druckmittelbetätigter Regelzylinder (15), eine elektrisch betätigte Ventileinrichtung (17) und eine Elektronik (3) eine Antriebsschlupf- und Fahrgeschwindigkeitsbegrenzungs-Einrichtung (3, 15, 16) dar, die im folgenden der Einfachheit halber als "ASR/GB-Einrichtung" bezeichnet wird.

Der Regelzylinder (15) ist in einem Gestänge (13, 18) angeordnet, welches ein Fahrpedal (19) und ein Stellglied (12) verbindet, welches den Betriebszustand eines Fahrzeugmotors bestimmt. Das Stellglied (12) ist zwischen einer durch (LL) gekennzeichneten Leerlaufstellung und einer durch (VL) gekennzeichneten Vollaststellung, nachstehend LL bzw. VL, bewegbar.

Der Regelzylinder (15) ist in der Lage, ausgehend von einer Ruhelage innerhalb eines Regelhubbereichs einen vom zugeführten Druck abhängigen Hub zu machen. Der Regelhub entspricht, gegebenenfalls unter Berücksichtigung etwaiger Übersetzungen im Gestänge, dem Weg des Stellglieds zwischen VL und LL. Der Druck, bei dem der Regelzylinder (15) gerade den Regelhub macht, sei Regelhubdruck genannt. Durch einen Hub verlängert der Regelzylinder (15) das Gestänge (13, 18) und bewegt dadurch, unabhängig von der Stellung des Fahrpedals (19), das Stellglied (12) in Richtung LL. Bei umgekehrter Anordnung des Stellglieds muß der Regelzylinder in nicht dargestellter Weise selbstverständlich das Gestänge verkürzend angeordnet sein.

Zur Steuerung der Druckbeaufschlagung des Regelzylinders (15) dient die Ventileinrichtung (17). Diese verbindet bei Beaufschlagung mit einem Steuersignal, das nachstehend beispielhaft als Steuerstrom angenommen wird, den Regelzylinder (15) über ein Leitungssystem (16, 20) mit einer Druckmittelquelle (21), die in üblicher Weise auf Vorratsdruck aufgefüllt ist. Die Ventileinrichtung (17) ist so ausgebildet, daß sie aus der Druckmittelquelle (21) einen vom Steuerstrom abhängigen Druck aussteuert. Vorzugsweise wird eine Ventileinrichtung (17) mit linearer Abhängigkeit, also eine Proportional-Ventileinrichtung, eingesetzt. Es können aber auch Ventileinrichtungen mit jeder anderen geeigneten Steuerstrom/Druck-Charakteristik eingesetzt werden.

Die Beaufschlagung der Ventileinrichtung (17) mit Steuerstrom erfolgt durch eine (elektrisch) mit ihr verbundene Elektronik (3). Diese besteht aus einer Auswerteeinrichtung (2) sowie in bekannter Weise aufgebauten und wirkenden Sensoren (1 bzw. 4) für die Fahrgeschwindigkeit, nachstehend Geschwindigkeitssensor, bzw. für die Raddrehgeschwindigkeit oder dergleichen der angetriebenen Räder, nachstehend Raddrehgeschwindigkeitsensor(en).

Die ASR/GB-Einrichtung (3, 15, 17) und die anderen bisher beschriebenen Bestandteile des Ausführungsbeispiels wirken wie folgt zusammen. Dabei wird unter "Durchdrehen" das Überschreiten eines zulässigen Radschlupfgrenzwertes verstanden, der beispielsweise in der Größenordnung des Radschlupfoptimums liegen kann.

Über das Fahrpedal (19), das Gestänge (13, 18) und den darin angeordneten Regelzylinder (15) gibt der Fahrzeugführer eine Stellung des Stellglieds (12) zwischen LL und VL vor. Stellt jetzt die Auswerteeinrichtung (2) mit Hilfe der Raddrehgeschwindigkeitssensoren (4) das Durchdrehen eines angetriebenen Rades oder mehrerer angetriebener Räder fest, was insbesondere beim Anfahren häufig der Fall ist, so wird dadurch die Elektronik (3), speziell die Auswerteeinrichtung (2), zur Aussteuerung von Steuerstrom an die Ventileinrichtung (17) aktiviert, die daraufhin einen entsprechenden Druck zum Regelzylinder (15) aussteuert. Dieser Druck veranlaßt den Regelzylinder (15) zu einem Hub, der das Gestänge (13, 18) verlängert und dadurch das Stellglied (12) in Richtung LL bewegt. Die Elektronik (3), insbesondere die Auswerteeinrichtung (2) ist so ausgebildet, daß sie bei diesem Vorgang den Steuerstrom so einstellt, daß die von dem entsprechenden Druck und damit von dem entsprechenden Hub des Regelzylinders (15) bestimmte Bewegung des Stellglieds (12) in Richtung LL gerade zur Aufhebung des Radschlupfsignals ausreicht. Auf diese Weise wird entgegen der Stellung des Fahrpedals (19) die Motorleistung gemindert, und zwar nicht mehr als gerade zur Beseitigung des Durchdrehens des bzw. der Antriebsräder erforderlich ist.

Vorzugsweise ist die Elektronik (3), insbesondere die Auswerteeinrichtung (2), zur Verwirklichung dieser Funktion so ausgebildet, daß der Steuerstrom von der Intensität des Durchdrehens, also der Größe der Abweichung zwischen dem Radschlupfistwert und dem Radschlupfgrenzwert, abhängt. Die Elektronik (3) kann so ausgebildet sein, daß diese Abhängigkeit an Veränderungen der Fahrzeug- oder Raddynamik, beispielsweise infolge Änderungen des Beladungszustands oder der Fahrbahnverhältnisse, adaptierbar ist.

Überschreitet das Fahrzeug bei wenigstens einem durchdrehenden Antriebsrad oder bei normal laufenden Antriebsrädern eine vorbestimmte höchstzulässige Fahrgeschwindigkeit, so liefert der Geschwindigkeitssensor (1) ein Geschwindigkeitssignal. Die Elektronik (3), die Ventileinrichtung (17) und der Regelzylinder (15) reagieren darauf entsprechend wie beim Durchdrehen, bis das Geschwindigkeitssignal verschwindet. Auch beim Überschreiten der höchstzulässigen Fahrgeschwindigkeit wird also entgegen der Stellung des Fahrpedals (19) die Motorleistung um ein gerade zur Beseitigung des Überschreitens ausreichendes Maß gemindert.

Über den bisher beschriebenen Grundumfang hinaus kann die ASR/GB-Einrichtung (3, 15, 17) auf vielfältige Arten, wie sie in Figur 1 zum Teil gestrichelt angedeutet sind, ausgestaltet und erweitert werden.

Die Elektronik (3) kann, wie durch einen mit (5) bezeichneten gestrichelten Umriß angedeutet ist, Teil einer Blockierschutzanlage, nachstehend ABS, sein. In diesem Fall kann die Elektronik (3) mit geringem zusätzlichem Aufwand an elektronischen Baugruppen, insbesondere unter Verwendung der Raddrehgeschwindigkeitssensoren des ABS, realisiert werden.

Die ASR/GB-Einrichtung (3, 15, 17) kann so ausgebildet sein, daß der Regelzylinder (15) erst von einem vorbestimmten Ansprechdruck ab Hub macht und daß die Elektronik (3) derart ausgebildet ist, daß der von ihr aussteuerbare minimale Steuerstrom im wesentlichen gerade ausreicht, die Ventileinrichtung (17) zur Aussteuerung des Ansprechdrucks zu aktivieren. Ferner, auch zusätzlich zu der soeben erwähnten Ausbildung, kann die Elektronik (3) derart ausgebildet sein, daß sie den maximalen Steuerstrom auf den dem Regelhubdruck entsprechenden Wert begrenzt. Bei diesem Regelhubdruck bewegt der Regelzylinder (15) bei vollbetätigtem Fahrpedal (19) das Stellglied (12) gerade in die Stellung LL. Diese Maßnahmen verhindern Über- bzw. Unterschwingungen des Drucks im Regelzylinder (15) und dienen dadurch der Erhöhung der ASR-Regelgüte und des Komforts. Bei diesen Maßnahmen müssen selbstverständlich Toleranzen und andere Störeinflüsse berücksichtigt werden. Zahlenmäßig haben sich ein Ansprechdruck von 1 bar und ein Vollhubdruck von 5 bar bewährt.

Die Elektronik (3) ist in vorteilhafter Weise digital ausführbar. Wenn sie als Steuerstrom einen pulsweitenmodulierten Strom aussteuert, stellt dessen Mittelwert den Steuerstrom dar.

Die Adaptivität der ASR/GB-Einrichtung (3, 15, 17) wird noch verbessert, wenn die Elektronik (3), insbesondere die Auswerteeinrichtung (2), hinsichtlich des minimalen und/oder des maximalen Steuerstroms, wie er weiter oben erwähnt ist, kalibrierbar ist. Zu diesem Zweck kann die Elektronik (3), insbesondere die Auswerteeinrichtung (2), mit einer lernfähigen Speichereinrichtung, beispielsweise dafür geeigneten elektronischen Schaltkreisen, insbesondere einem EEPROM, ausgerüstet sein, in welche die aktuellen Werte der jeweiligen Fahrzeuginstallation eingelernt und gespeichert werden. Dies kann während eines Kalibriervor-

3

gangs, beispielsweise bei der Erstinstallation oder bei der Inbetriebnahme, erfolgen.

Zu den in Fig. 1 mit gestrichelten Linien eingetragenen Erweiterungen der Grundausführung ist folgendes auszuführen.

Bei bestimmten Fahrzeugtypen erfolgt auch die Stillsetzung des Fahrzeugmotors mittels des Stellglieds (12). Dieses ist in einem solchen Fall aus Richtung VL gesehen über LL hinaus in eine durch ST gekennzeichnete Stillsetzungsstellung bewegbar. Zur Aufrechterhaltung der ASR-Regelgüte und des Komforts kann in diesem Fall mittels eines Anschlagzylinders (11) die Bewegbarkeit des Stellgliedes (12) in Stellung LL begrenzt werden. Die Wirkung des Anschlagzylinders (11) auf das Stellglied (12) wird durch dessen Beaufschlagung mit einem Umschaltdruck aufgehoben, wodurch das Stellglied (12) in Stellung ST bewegbar wird. Eine Auslegung des Anschlagzylinders (11) so, daß der Umschaltdruck höher als der Regelhubdruck ist, z.B. 6 bar, eröffnet die folgenden Erweiterungsmöglichkeiten. Die vorstehend und nachstehend im Zusammenhang mit dem Umschaltdruck beschriebenen Wirkungen treten auch bei höheren Drücken ein.

Der Regelzylinder (15) kann so ausgebildet sein, daß er unter der Einwirkung des Umschaltdrucks einen über den Regelhub hinausgehenden Hub macht und dabei durch weitere Längenänderung des Gestänges (13, 18) das Stellglied (12) in Stellung ST bewegt. Zur Stillsetzung des Fahrzeugmotors kann ein mit dem Anschlagzylinder (11) und dem Regelzylinder (15) verbundenes Motorbremsventil (8) vorgesehen sein, über welches der Anschlagzylinder (11) und, parallel zur Ventileinrichtung (17), der Regelzylinder (15) mit dem Umschaltdruck beaufschlagbar sind. Wie das Leitungssystem (6, 10) andeutet, kann auch der Umschaltdruck dem Druckmittelvorrat (21) entnommen werden, dessen Vorratsdruck in diesem Fall wenigstens so hoch wie der Umschaltdruck sein muß. Der Anschluß des Regelzylinders (15) an das Motorbremsventil (8) erfolgt dabei über ein Zweiwegeventil (14), welches die systemmäßige Parallellage der Ventileinrichtung (17) und des Motorbremsventils (8) sicherstellt. Das Motorbremsventil (8) kann elektrisch betätigbar und über eine Schalteinrichtung aktivierbar sein. Der Fahrzeugmotor wird dadurch elektrisch abstellbar. Die Schalteinrichtung kann, wie durch (7) angedeutet, der Elektronik (3) vorgeschaltet sein, so daß das Betätigungssignal für das Motorbremsventil (8) durch die Elektronik (3) hindurchgeschleift wird. An das Motorbremsventil (8) kann noch eine durch (9) symbolisierte druckmittelbetätigte Motorbremse angeschlossen sein. In diesem Fall steht das Ausführungsbeispiel für eine integrierte Anlage aus ASR/GB-Einrichtung, Motorstillsetzungseinrichtung und Motorbremseinrichtung. Dabei wirkt die Motorbremseinrichtung bei gleichzeitigem Lösen der Motorkupplung als Motorstillsetzungseinrichtung.

Die Motorbremseinrichtung kann zur Unterstützung der ASR/GB-Einrichtung (3, 15, 17) herangezogen werden, wenn die durch dieselbe bei maximalem Steuerstrom bewirkte Bewegung des Stellglieds (12) in Stellung LL nicht ausreicht, das Überschreiten der höchstzulässigen Fahrgeschwindigkeit zu beseitigen. Die Elektronik (3) ist dann derart ausgebildet, daß sie in diesem Fall statt der Schalteinrichtung (7) das Motorbremsventil (8) betätigt. Dadurch wird das Stellglied (12) wie bei der Motorbremsbetätigung in Stellung ST bewegt. Setzt in dieser Phase das ABS ein, so kann dessen Funktion durch die Mitwirkung der Motorbremse gestört werden.

Dies gilt selbstverständlich auch dann, wenn die ABS in Betrieb geht, während die Motorbremseinrichtung über die Schalteinrichtung (7) willkürlich betätigt ist. In diesen Fällen kann bei Beendigung des Blockierschutzbetriebes die Gefahr eines instabilen Fahrzustands infolge der Wiederbetätigung der Motorbremseinrichtung durch eine entsprechende Ausbildung der Elektronik (3) gemindert werden. Die Elektronik (3) ist dabei derart ausgebildet, daß sie nach Beendigung des Blockierschutzbetriebs vor Reaktivierung des Motorbremsventils (8) in einer ersten Stufe nur den zur Bewegung des Stellglieds (12) in die Stellung LL ausreichenden Steuerstrom zur Ventileinrichtung (17) aussteuert.

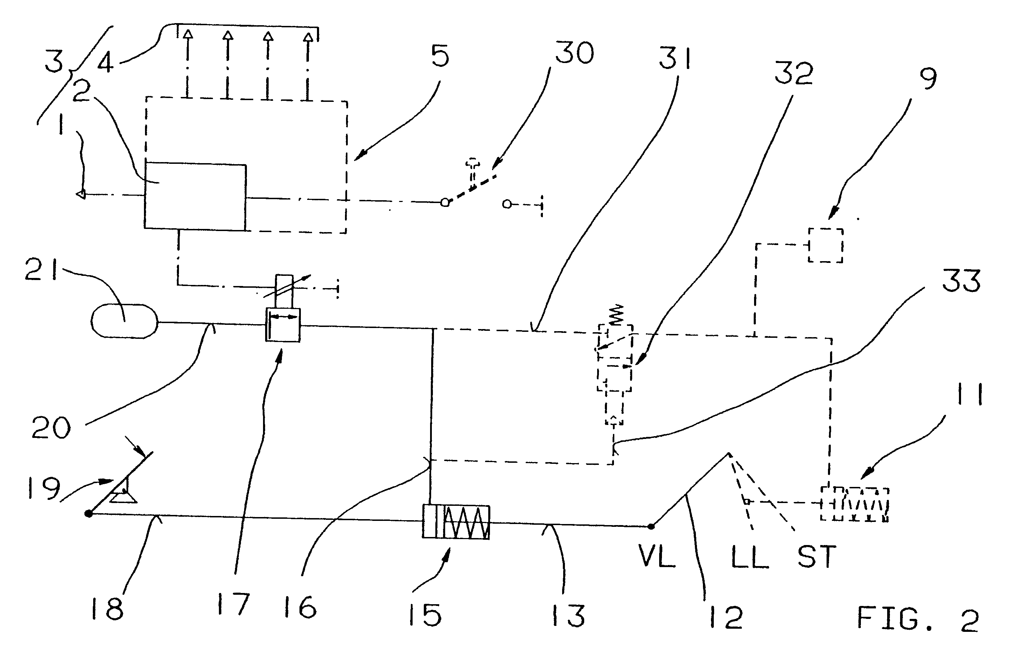

Das Ausführungsbeispiel nach Figur 2 unterscheidet sich von dem früheren Ausführungsbeispiel durch eine andere Ausbildung der Motorstillsetzungseinrichtung und der Motorbremseinrichtung. Das dortige Motorbremsventil (8) ist hier durch ein druckgesteuertes Umschaltventil (32), welches vorzugsweise ebenfalls ein Wegeventil ist, ersetzt. Das Umschaltventil (32) ist in bekannter Weise derart ausgebildet, daß es bei Beaufschlagung seines Steueranschlusses mit dem Umschaltdruck durchgängig wird und im übrigen gesperrt ist und seinen Auslaß druckentlastet.

Das Umschaltventil (32) ist an seinem Einlaß und an seinem Steueranschluß über Druckmittelleitungen (31) bzw. (33) mit der zwischen der Ventileinrichtung (17) und dem Regelzylinder (15) gelegenen Druckmittelleistung (16) des Leistungssystems (16, 20) verbunden. Zur willkürlichen Betätigung der Motorbremseinrichtung und der Motorstillsetzungseinrichtung ist eine Schalteinrichtung (30) vorgesehen, deren Betätigungssignal wie beim früheren Ausführungsbeispiel durch die Elektronik (3) hindurchgeschleift werden kann.

Bei Betätigung der Schalteinrichtung (30) steuert die Elektronik (3) zur Ventileinrichtung (17) einen Steuerstrom aus, der diese zur Aussteuerung des Umschaltdruckes aktiviert, wodurch die Druckmittelleitung (16), der Regelzylinder (15) sowie über die Druckmittelleitungen (31) bzw. (33) der Einlaß und der Steueranschluß des Umschaltventils (32) mit Umschaltdruck beaufschlagt werden. Dadurch wird das Umschaltventil (32) durchlässig. Der Anschlagzylinder (11), die Motorbremse (9) und der Regelzylinder (15) wirken nunmehr unter der Einwirkung des Umschaltdrucks wie beim früheren Ausführungsbeispiel beschrieben.

Den vorstehenden Ausführungen zufolge ist also die Ventileinrichtung (17) über das Umschaltventil (32) mit dem Anschlagzylinder (11) verbindbar. Analog zum früheren Ausführungsbeispiel läßt sich auch hier die Motorbremseinrichtung zur Unterstützung der ASR/GB-Einrichtung (3, 15, 17) heranziehen, wenn durch den maximalen Steuerstrom ein Überschreiten der höchstzulässigen Fahrgeschwindigkeit nicht beseitigt wird. Wie dort muß zu diesem Zweck die Elektronik (3) derart ausgebildet sein, daß sie in diesem Fall einen Steuerstrom aussteuert, der die Ventileinrichtung (17) zur Aussteuerung des Umschaltdrucks aktiviert. Aus dem beim früheren Ausführungsbeispiel genannten Grund ist es auch hier zweckmäßig, die Elektronik (3) derart auszubilden, daß sie beim Einsetzen eines Blockierschutzbetriebs die Motorbremseinrichtung abschaltet. Zu diesem Zweck muß die Elektronik (3) in diesem Fall bei diesem Ausführungsbeispiel den Steuerstrom unter den Wert mindern, dem die Ventileinrichtung (17) den Umschaltdruck zuordnet. Für den Fall, daß die Motorbremseinrichtung gerade über die Schalteinrichtung (30) betätigt ist, muß diese Betätigung bei einsetzendem Blockierschutzbetrieb durch in bekannter Weise wirkende Schaltmittel in der Elektronik (3) aufgehoben werden.

Wie beim früheren Ausführungsbeispiel und aus dem dort genannten Grund kann auch hier die Motorbremseinrichtung bei Beendigung des Blockierschutzbetriebes stufenweise wieder eingeschaltet werden. Zu diesem Zweck kann die Elektronik (3) derart ausgebildet sein, daß sie den Steuerdruck in Stufen wieder auf den dem Umschaltdruck entsprechenden Wert erhöht, wobei sie in einer ersten Stufe nur einen zur Bewegung des Stellglieds (12) in die Stellung LL ausreichenden Steuerstrom aussteuert.

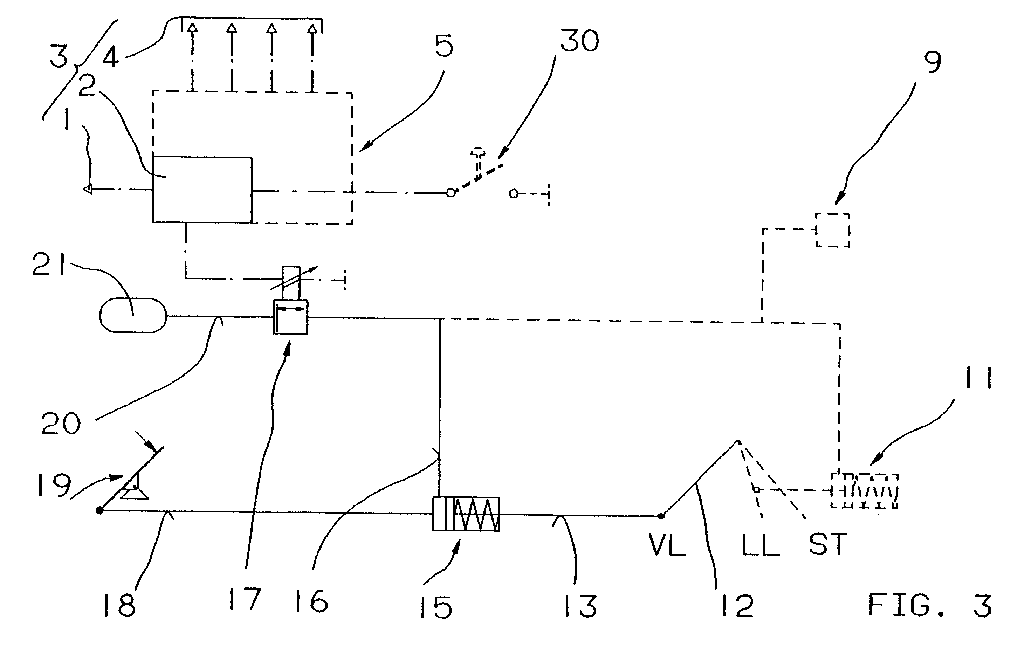

Das Ausführungsbeispiel nach Fig. 2 läßt sich gemäß Fig. 3 dadurch vereinfachen, daß der Anschlagzylinder (11) und die Motorbremse (9) so ausgebildet sind, daß sie bei Drücken unterhalb des Umschaltdrucks nicht ansprechen. In diesem Fall können diese Bestandteile direkt mit der Ventileinrichtung (17) verbunden werden und das Umschaltventil (32) entfallen.

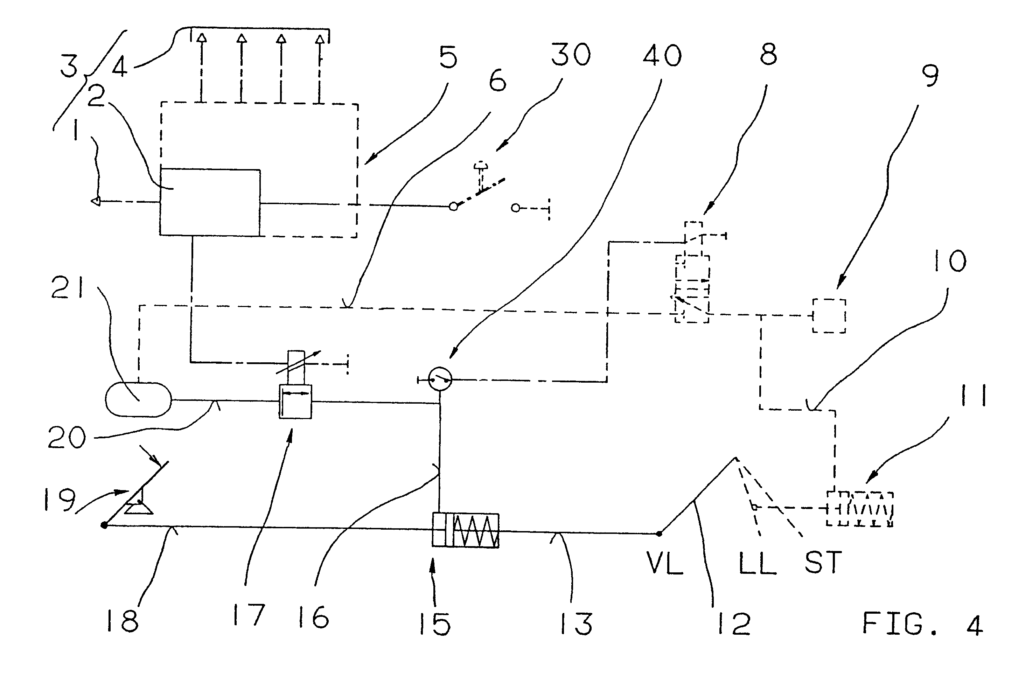

Das Ausführungsbeispiel nach Fig. 4 entspricht dem Ausführungsbeispiel nach Fig. 2 mit dem Unterschied, daß die druckabhängige Steuereinrichtung des Umschaltventils (32) durch eine elektrische Steuereinrichtung und einen Druckschalter (40) ersetzt ist. Das Umschaltventil besteht hier deshalb aus dem Druckschalter (40) und einem Motorbremsventil (8) in elektrisch betätigbarer Ausbildung gemäß dem Ausführungsbeispiel nach Fig. 1.

Der Druckschalter (40) ist elektrisch dem Motorbremsventil (8) vorgeschaltet ; er überwacht den (von der Ventileinrichtung (17) ausgesteuerten) Druck des Regelzylinders (15), schließt bei einem Anstieg dieses Drucks auf den Wert des Umschaltdrucks den Stromkreis des Motorbremsventils (8) und öffnet dadurch dessen Durchgang. Bei entsprechender Ausbildung des Motorbremsventils (8) kann der Druckschalter (40) auch ein Öffner sein.

Laut Darstellung entnimmt das Motorbremsventil (8) den Umschaltdruck für den Anschlagzylinder (11) und die Motorbremse (9) dem Druckmittelvorrat (21) direkt über den Teil (6) des Leitungssystems (6, 10). Diese Entnahme kann aber auch am Ausgang der Ventileinrichtung (17), beispielsweise an der Druckmittelleitung (16), erfolgen.

Unter entsprechender Berücksichtigung des erwähnten Unterschieds ist die Wirkungsweise dieses Ausführungsbeispiels derjenigen des Ausführungsbeispiels nach Fig. 2 gleich.

Sollen auch in diesem Ausführungsbeispiel die Motorbremseinrichtung und die Motorstillsetzungseinrichtung willkürlich betätigbar sein, so ist dazu eine Schalteinrichtung (30), wie beim Ausführungsbeispiel nach Fig. 2 beschrieben, einzusetzen.

Für alle Ausführungsbeispiele gilt, daß — abgesehen von der Motorstillsetzung beim Lösen der Motorkupplung — mit gleichen Funktionen anstelle der Motorbremse (9) oder zusätzlich zu dieser auch ein druckgesteuerter Retarder einsetzbar ist. Bei den Ausführungsbeispielen nach den Figuren 1 und 4 ist auch der Einsatz eines elektrisch gesteuerten Retarders möglich, der von dem dem Motorbremsventil (8) zugeführten elektrischen Steuersignal mitgesteuert werden kann.

Im übrigen gelten für jedes Ausführungsbeispiel die zu den anderen Ausführungsbeispielen gemachten Ausführungen entsprechend, sofern sich aus Vorstehendem nichts anderes ergibt.

Anstelle der beschriebenen Zusammenfassung von Motorstillsetzungseinrichtung und Motorbremseinrichtung können diese in für den Fachmann geläufiger Weise auch getrennt ausgeführt werden, so daß die Motorstillsetzung nicht automatisch bei Betätigung der Motorbremseinrichtung und gleichzeitigem Lösen der Motorkupplung erfolgt. Dazu kann beispielsweise der Anschlagzylinder getrennt von dem Regelzylinder und der Motorbremse mit Umschaltdruck beaufschlagt werden.

Der Fachmann erkennt, daß sich der Schutzbereich der vorliegenden Erfindung nicht in den Ausführungsbeispielen erschöpft, sondern alle Ausgestaltungen erfaßt, deren Merkmale sich den Patentansprüchen unterordnen.

## Patentansprüche

1. Antriebsschlupfregel- und Fahrgeschwindigkeitsbegrenzungs-Einrichtung, mit einem druckmittelbetätigten Regelzylinder (15), der in einem ein Fahrpedal (19) und ein den Betriebszustand eines Fahrzeugmotors bestimmenden Stellglied (12) verbindenden Gestänge (13, 18) angeordnet ist, wobei der Regelzylinder (15) einen vom zugeführten Druck abhängigen Hub macht und dabei durch Längenänderung des Gestänges (13, 18) das Stellglied (12) in Richtung einer Leerlaufstellung (LL) bewegt, und wobei der Regelhub des Regelzylinders der Bewegung des Stellglieds zwischen einer Vollaststellung (VL) und der Leerlaufstellung (LL) entspricht, mit einer elektrisch betätigten Ventileinrichtung (17), die bei Beaufschlagung mit einem Steuersignal den Regelzylinder (15) mit einer Druckmittelquelle (21) verbindet, und mit einer mit der Ventileinrichtung (17) verbundenen Elektronik (3), die beim Durchdrehen wenigstens eines Antriebsrades und/oder beim Überschreiten der höchstzulässigen Fahrgeschwindigkeit ein Steuersignal für die Betätigung der Ventileinrichtung (17) aussteuert, dadurch gekennzeichnet, daß die Ventileinrichtung (17) so ausgebildet ist, daß sie einen vom Steuersignal abhängigen Druck aussteuert, die Elektronik (3) so ausgebildet ist, daß sie beim Durchdrehen des wenigstens einen Antriebsrades und/oder beim Überschreiten der höchstzulässigen Fahrgeschwindigkeit ein Steuersignal einstellt, bei dem die Ventileinrichtung (17) einen gerade zur Bewegung des Stellglieds (12) in eine das Durchdrehen bzw. das Überschreiten beseitigende Stellung ausreichenden Druck aussteuert.

2. Einrichtung nach Anspruch 1, dadurch gekennzeichnet, daß die Elektronik (3) Teil einer Blockierschutzeinrichtung (5) ist.

3. Einrichtung nach einem der vorhergehenden Ansprüche, wobei der Regelzylinder (15) einen Ansprechdruck aufweist, dadurch gekennzeichnet, daß die Elektronik (3) derart ausgebildet ist, daß das von ihr aussteuerbare minimale Steuersignal im wesentlichen gerade ausreicht, die Ventileinrichtung (17) zur Aussteuerung des Ansprechdrucks zu aktivieren.

4. Einrichtung nach einem der vorhergehenden Ansprüche, dadurch gekennzeichnet, daß die Elektronik (3) derart ausgebildet ist, daß das von ihr zur Beseitigung des Durchdrehens oder der Geschwindigkeitsüberschreitung aussteuerbare maximale Steuersignal gerade ausreicht, die Ventileinrichtung (17) zur Aussteuerung eines Drucks zu aktivieren, bei dem der Regelzylinder (15) das Stellglied (12) bei vollbetätigtem Fahrpedal (19) gerade in die Leerlaufstellung (LL) bewegt.

5. Einrichtung nach einem der vorhergehenden Ansprüche, dadurch gekennzeichnet, daß das Steuersignal der Mittelwert eines von der Elektronik (3) ausgesteuerten pulsweitenmodulierten Signals ist.

6. Einrichtung nach einem der Ansprüche 3 bis 5, dadurch gekennzeichnet, daß die Elektronik (3) hinsichtlich des minimalen und/oder des maximalen Steuersignals kalibrierbar ist.

7. Einrichtung nach Anspruch 6, dadurch gekennzeichnet, daß die Elektronik (3) lernfähig ist und daß die jeweiligen Kalibrierwerte eingelernt werden.

8. Einrichtung nach Anspruch 7, dadurch gekennzeichnet, daß die Elektronik (3) zur Herstellung der Lernfähigkeit dafür geeignete elektronische Schaltkreise, beispielsweise einen EEPROM, aufweist.

9. Einrichtung nach einem der vorhergehenden Ansprüche, wobei das Stellglied (12) aus Richtung der Vollaststellung (VL) über die Leerlaufstellung (LL) hinaus in eine Stillsetzungsstellung (ST) bewegbar ist, dadurch gekennzeichnet, daß ein Anschlagzylinder (11) vorgesehen ist, der bei Beaufschlagung mit wenigstens einem Umschaltdruck, eine eine Bewegung des Stellglieds (12) in die Stillsetzungsstellung (ST) ermöglichende Stellung annimmt und im übrigen dessen Leerlaufstellung (LL) festlegt.

10. Einrichtung nach Anspruch 9, wobei der Umschaltdruck höher als der Regelhubdruck ist und wobei der Regelzylinder (15) so ausgebildet ist, daß er bei Beaufschlagung mit dem Umschaltdruck einen über den Regelhub hinausgehenden Hub macht und dabei durch Längenänderung des Gestänges (13, 18) das Stellglied (12) in die Stillsetzungsstellung (ST) bewegt, dadurch gekennzeichnet, daß ein mit dem Anschlagzylinder (11) und dem Regelzylinder (15) verbundenes Motorbremsventil (8) vorgesehen ist, über welches der Anschlagzylinder (11) und, parallel zur Ventileinrichtung (17), der Regelzylinder (15) mit wenigstens dem Umschaltdruck beaufschlagbar sind.

11. Einrichtung nach den Ansprüchen 2 und 10, wobei das Motorbremsventil (8) elektrisch betätigbar ist, dadurch gekennzeichnet, daß die Elektronik mit dem Motorbremsventil (8) verbunden und derart ausgebildet ist, daß sie, wenn durch das maximale Steuersignal ein Überschreiten der höchstzulässigen Fahrgeschwindigkeit nicht beseitigt wird, das Motorbremsventil (8) aktiviert.

12. Einrichtung nach Anspruch 11, dadurch gekennzeichnet, daß das elektrische Betätigungssignal für das Motorwagenbremsventil (8) durch die Elektronik (3) hindurchgeschleift wird.

13. Einrichtung nach einem der Ansprüche 11 oder 12, dadurch gekennzeichnet, daß die Elektronik (3) derart ausgebildet ist, daß sie im Blockierschutzbetrieb das Motorbremsventil (8) deaktiviert.

14. Einrichtung nach Anspruch 9, dadurch gekennzeichnet, daß
die Ventileinrichtung (17) über ein druckgesteuertes Umschaltventil (32) mit dem Anschlagzylinder (11) verbindbar ist,
das Umschaltventil (32) bei Beaufschlagung mit wenigstens dem Umschaltdruck die Verbindung zwischen Ventileinrichtung (17) und Anschlagzylinder (11) öffnet und im übrigen diese Verbindung schließt und dabei den Anschlagzylinder (11) druckentlastet,
und daß die Elektronik (3) derart ausgebildet ist, daß sie, wenn durch das maximale Steuersignal ein Überschreiten der höchstzulässigen Fahrgeschwindigkeit nicht beseitigt wird, ein Steuersignal aussteuert, bei dem die Ventileinrichtung (17) wenigstens den Umschaltdruck aussteuert.

15. Einrichtung nach Anspruch 9, dadurch gekennzeichnet, daß die Ventileinrichtung (17) mit dem Anschlagzylinder (11) verbunden ist,
der Anschlagzylinder (11) einen Ansprechdruck von der Höhe des Umschaltdrucks hat
und daß die Elektronik (3) derart ausgebildet ist, daß sie, wenn durch das maximale Steuersignal ein Überschreiten der höchstzulässigen Fahrgeschwindigkeit nicht beseitigt wird, ein Steuersignal aussteuert, bei dem die Ventileinrichtung (17) wenigstens den Umschaltdruck aussteuert.

16. Einrichtung nach einem der Ansprüche 14 oder 15, dadurch gekennzeichnet, daß der Elektronik (3) eine Schalteinrichtung (30) vorgeschaltet ist, bei deren Betätigung die Elektronik (3) das Steuersignal aussteuert, bei dem die Ventileinrichtung (17) wenigstens den Umschaltdruck aussteuert.

17. Einrichtung nach Anspruch 2 und einem der Ansprüche 14 bis 16, dadurch gekennzeichnet, daß die Elektronik (3) derart ausgebildet ist, daß sie im Blockierschutzbetrieb das Steuersignal unter den dem Umschaltdruck entsprechenden Wert mindert.

18. Einrichtung nach Anspruch 13, dadurch gekennzeichnet, daß die Elektronik (3) derart ausgebildet ist, daß sie nach Beendigung eines Blockierschutzbetriebs vor Reaktivierung des vor dem Blockierschutzbetrieb aktivierten Motorbremsventils (8) in einer ersten Stufe nur ein zur Bewegung des Stellglieds (12) in die Leerlaufstellung (LL) ausreichendes Steuersignal aussteuert.

19. Einrichtung nach Anspruch 17, dadurch gekennzeichnet, daß die Elektronik (3) derart ausgebildet ist, daß sie nach Beendigung des Blockierschutzbetriebs den Steuerdruck in Stufen wieder auf den wenigstens dem Umschaltdruck entsprechenden Wert erhöht, wobei sie in einer ersten Stufe nur ein zur Bewegung des Stellglieds (12) in die Leerlaufstellung (LL) ausreichendes Steuersignal aussteuert.

20. Einrichtung nach Anspruch 9, wobei der Umschaltdruck höher als der Regelhubdruck ist und wobei der Regelzylinder (15) so ausgebildet ist, daß er bei Beaufschlagung mit dem Umschaltdruck einen über den Regelhub hinausgehenden Hub macht und dabei durch Längenänderung des Gestänges (13, 18) das Stellglied (12) in die Stillsetzungsstellung (ST) bewegt, dadurch gekennzeichnet, daß
ein mit dem Anschlagzylinder (11) verbundenes, elektrisch betätigbares Motorbremsventil (8) vorgesehen ist, über welches der Anschlagzylinder (11) mit wenigstens dem Umschaltdruck beaufschlagbar ist,
ein den Druck des Regelzylinders (15) überwachender und beim Umschaltdruck schaltender, elektrisch dem Motorbremsventil (2) vorgeschalteter, Druckschalter (40) vorgesehen ist
und daß die Elektronik (3) derart ausgebildet ist, daß sie, wenn durch das maximale Steuersignal ein Überschreiten der höchstzulässigen Fahrgeschwindigkeit nicht beseitigt wird, ein Steuersignal aussteuert, bei dem die Ventileinrichtung (17) wenigstens den Umschaltdruck aussteuert.

21. Einrichtung nach Anspruch 20, dadurch gekennzeichnet, daß der Elektronik (3) eine Schalteinrichtung (30) vorgeschaltet ist, bei deren Betätigung die Elektronik (3) das Steuersignal aussteuert, bei dem die Ventileinrichtung (17) wenigstens den Umschaltdruck aussteuert.

22. Einrichtung nach Anspruch 2 und einem der Ansprüche 20 bis 21, dadurch gekennzeichnet, daß die Elektronik (3) derart ausgebildet ist, daß sie im Blockierschutzbetrieb das Steuersignal unter den dem Umschaltdruck entsprechenden Wert mindert.

23. Einrichtung nach Anspruch 22, dadurch gekennzeichnet, daß die Elektronik (3) derart ausgebildet ist, daß sie nach Beendigung des Blockierschutzbetriebs den Steuerdruck in Stufen wieder auf den wenigstens dem Umschaltdruck entsprechenden Wert erhöht, wobei sie in einer ersten Stufe nur ein zur Bewegung des Stellglieds (12) in die Leerlaufstellung (LL) ausreichendes Steuersignal aussteuert.

## Claims

1. A drive slip control and driving speed limiting arrangement,
with a pressure medium-operated control cylinder (15), which is arranged in a linkage (13, 18) connected to an accelerator pedal (19) and to an actuator (12) determining the operational state of a vehicle motor, the control cylinder (15) having a stroke dependent on the supplied pressure, and in so doing moving the actuator (12)

7

through a change in length of the linkage (13, 18) towards an idling position, (LL), and the control stroke of the control cylinder corresponding to the movement of actuator between a full-load position (VL), and the idling position (LL),

with an electrically operated valve arrangement (17), which, on receiving a control signal connects the control cylinder (15) to a source of pressure medium (21),

and with electronics (3) connected to the valve arrangement (17), the electronics applying a control signal for the operation of the valve arrangement (17) whenever at least one drive wheel slips and/or whenever the maximum allowable driving speed is exceeded, characterized in that the valve arrangement (17) is constructed so that it issues a pressure dependent on the control signal,

the electronics (3) are constructed so that whenever at least one drive wheel slips and/or whenever the maximum allowable driving speed is exceeded they adjust a control signal at which the valve arrangement (17) issues a pressure that is just sufficient to move the actuator (12) into a position eliminating the slipping or the excess speed.

2. An arrangement according to claim 1, characterized in that the electronics (3) are part of an anti-lock arrangement (5).

3. An arrangement according to one of the preceding claims, wherein the control cylinder (15) has an operating pressure, characterized in that the electronics (3) are constructed so that the minimum control signal that they are arranged to apply is essentially just sufficient to activate the valve arrangement (17) to issue the operating pressure.

4. An arrangement according to one of the preceding claims, characterized in that the electronics (3) are constructed so that the maximum control signal that they are arranged to apply to eliminate the slipping or overspeeding is just sufficient to activate the valve arrangement (17) to issue a pressure at which the control cylinder (15) just moves the actuator (12), when the accelerator pedal (19) is fully operated, into the idling position (LL).

5. An arrangement according to one of the preceding claims, characterized in that the control signal is the mean value of a pulse width-modulated signal applied by the electronics (3).

6. An arrangement according to one of claims 3 to 5, characterized in that the electronics (3) are calibrated in respect of the minimum and/or maximum control signal.

7. An arrangement according to claim 6, characterized in that the electronics are adaptive and that the respective calibration values are stored.

8. An arrangement according to claim 7, characterized in that the electronics (3) comprise suitable electronic circuits, for example an EEPROM, for producing the adaptability.

9. An arrangement according to one of the preceding claims, in which the actuator (12) is movable from the direction of the full-load position (VL) beyond the idling position (LL) into a stopping position (ST), characterized in that a stop cylinder (11) is provided which, on being pressurized with at least a change-over pressure, assumes a position allowing a movement of the actuator (12) into the stopping position (ST), and otherwise determines the idling position thereof.

10. An arrangement according to claim 9, in which the change-over pressure is higher than the control stroke pressure and in which the control cylinder (15) is constructed so that, on being pressurized with the change-over pressure, it covers a path going beyond the control stroke and in so doing, by changing the length of the linkage (13, 18), moves the actuator (12) into the stopping position (ST), characterized in that a motor brake valve (8) connected to the stop cylinder (11) and the control cylinder (15) is provided, by means of which valve the stop cylinder (11) and, in parallel with the valve arrangement (17), the control cylinder (15) are pressurizable with at least the change-over pressure.

11. An arrangement according to claims 2 and 10, in which the motor brake valve (8) is electrically operable, characterized in that the electronics are connected to the motor brake valve (8) and are constructed so that, whenever overshooting of the maximum allowable driving speed is not eliminated by the maximum control signal, the motor brake valve (8) is actuated.

12. An arrangement according to claim 11, characterized in that the electrical operating signal for the motor vehicle brake valve (8) is routed through the electronics (3).

13. An arrangement according to one of claims 11 or 12, characterized in that the electronics (3) are constructed so that they are disabled in the anti-lock mode of the motor brake valve (8).

14. An arrangement according to claim 9, characterized in that the valve arrangement (17) is arranged to be connected by way of a pressure-controlled change-over valve (32) to the stop cylinder (11),

on being pressurized with at least the change-over pressure the change-over valve (32) opens the connection between the valve arrangement (17) and the stop cylinder (11) and otherwise closes this connection and in so doing relieves the stop cylinder (11) of pressure,

and the electronics (3) are constructed so that, whenever the maximum control signal does not eliminate overshooting of the maximum allowable driving speed, they apply a control signal on which the valve arrangement

EP 0 346 592 B1

(17) issues at least the change-over pressure.

15. An arrangement according to claim 9, characterized in that the valve arrangement (17) is connected to the stop cylinder (11),
the stop cylinder (11) has an operating pressure of the level of the change-over pressure,
and the electronics (3) are constructed so that, whenever the maximum control signal does not eliminate exceeding of the maximum allowable driving speed, they apply a control signal on which the valve arrangement (17) issues at least the change-over pressure.

16. An arrangement according to one of claims 14 or 15, characterized in that the electronics (3) have a switching device (30) connected upstream, on operation of which the electronics (3) apply the control signal on which the valve arrangement (17) issues at least the change-over pressure.

17. An arrangement according to claim 2 and one of claims 14 to 16, characterized in that the electronics (3) are constructed so that in anti-lock mode they reduce the control signal to a value below the value corresponding to the change-over pressure.

18. An arrangement according to claim 13, characterized in that the electronics (3) are constructed so that, after completion of an anti-lock operation and before re-engagement of the motor brake valve (8) operated before the anti-lock operation, in a first stage they apply a control signal only just sufficient to move the actuator (12) into the idling position (LL).

19. An arrangement according to claim 17, characterized in that the electronics (3) are constructed so that, after completion of an anti-lock operation, they increase the control pressure again in stages to a value corresponding at least to the change-over pressure, wherein in a first stage they apply a control signal only just sufficient to move the actuator (12) into the idling position (LL).

20. An arrangement according to claim 9, wherein the change-over pressure is higher than the control pressure and wherein the control cylinder (15) is constructed so that, on being pressurized with the change-over pressure, it covers a path going beyond the control stroke and in so doing, by changing the length of the linkage (13, 18), moves the actuator (12) into the stopping position (ST), characterized in that an electrically operable motor brake valve (8) connected to the stop cylinder (11) is provided, by means of which the stop cylinder (11) is arranged to be pressurized with at least the change-over pressure,
a pressure switch (40) that is connected in the electrical supply to the motor brake valve (2), monitors the pressure of the control cylinder (15) and switches at change-over pressure is provided
and the electronics (3) are constructed so that, whenever exceeding of the maximum allowable driving speed is not eliminated by the maximum control signal, they apply a control signal at which the valve arrangement (17) issues at least the change-over pressure.

21. An arrangement according to claim 20, characterized in that upstream of the electronics (3) there is a switching device (30), on operation of which the electronics (3) apply the control signal on which the valve arrangement (17) issues at least the change-over pressure.

22. An arrangement according to claim 2 and one of claims 20 to 21, characterized in that the electronics (3) are constructed so that in anti-lock mode they reduce the control signal to below the value corresponding to the change-over pressure.

23. An arrangement according to claim 22, characterized in that the electronics (3) are constructed so that, on termination of the anti-lock operation, they increase the control pressure in stages again to the value corresponding at least to the change-over pressure, wherein in a first stage they apply a control signal only sufficient to move the actuator (12) into the idling position (LL).


## Revendications

1. Dispositif de régulation du glissement d'entraînement et de limitation de la vitesse de déplacement, comportant
— un cylindre de réglage (15) qui est actionné par fluide de pression et est agencé dans une tringlerie (13, 18) reliant une pédale d'accélérateur (19) et un organe positionneur (12) déterminant l'état de fonctionnement d'un moteur de véhicule automobile, le cylindre de réglage (15) accomplissant une course dépendant de la pression fournie, et déplaçant alors, par modification de la longueur de la tringlerie (13, 18), l'organe positionneur (12) vers une position de marche à vide (LL), la course de réglage du cylindre de réglage correspondant au mouvement de l'organe positionneur entre une position de pleine charge (VL) et la position de marche à vide (LL),
— un dispositif de vanne (17) actionné électriquement qui, lorsqu'il est sollicité par un signal de commande, relie le cylindre de réglage (15) à une source de fluide de pression (21), et
— une électronique (3) qui est reliée au dispositif de vanne (17) et qui, en cas de franchissement rotatoire

9

par au moins une roue d'entraînement et/ou en cas de dépassement de la vitesse de déplacement maximale admissible, émet un signal de commande pour l'actionnement du dispositif de vanne (17), caractérisé par le fait que le dispositif de vanne (17) est conçuréalisé de manière telle qu'il fournisse en tant que commande une pression dépendant du signal de commande,

l'électronique (3) est conçue-réalisée de manière qu'en cas de franchissement rotatoire par ladite roue d'entraînement au nombre d'au moins une et/ou en cas de dépassement de la vitesse de déplacement maximale admissible, elle établit un signal de commande pour laquelle le dispositif de vanne (17) fournit en tant que commande une pression juste suffisante pour déplacer l'organe positionneur (12) à une position éliminant le franchissement rotatoire et /ou le dépassement.

2. Dispositif selon revendication 1, caractérisé par le fait que l'électronique (3) fait partie d'un dispositif d'antiblocage (5).

3. Dispositif selon l'une des revendications précédentes, dans lequel le cylindre de réglage (15) présente une pression de réponse, caractérisé par le fait que l'électronique (3) est conçue-réalisée de manière que le signal de commande minimal qu'elle peut émettre en tant que commande soit sensiblement juste suffisant pour activer le dispositif de vanne (17) de manière à lui faire émettre en tant que commande la pression de réponse.

4. Dispositif selon l'une des revendications précédentes, caractérisé par le fait que l'électronique (3) est conçue-réalisée de manière que le signal de commande maximal qu'elle peut émettre pour éliminer le franchissement rotatoire ou le dépassement de vitesse soit juste suffisant pour activer le dispositif de vanne (17) et lui faire émettre, en tant que commande, une pression pour laquelle le cylindre de réglage (15) déplace l'organe positionneur (12) juste à la position de marche à vide (LL), alors que la pédale d'accélérateur (19) est poussée à fond.

5. Dispositif selon l'une des revendications précédentes, caractérisé par le fait que le signal de commande est la valeur moyenne d'un signal modulé en largeur d'impulsion émis, en tant que commande, par l'électronique (3).

6. Dispositif selon l'une des revendications 3 à 5, caractérisé par le fait que l'électronique (3) est apte à être calibrée pour ce qui est du signal de commande minimal et/ou maximal.

7. Dispositif selon revendication 6, caractérisé par le fait que l'électronique (3) est apte à l'apprentissage et par le fait que les valeurs de calibrage concernées lui sont enseignées.

8. Dispositif selon revendication 7, caractérisé par le fait que, pour réaliser l'aptitude à l'apprentissage, l'électronique (3) présente des circuits électroniques appropriés à cette fin, par exemple une EEPROM.

9. Dispositif selon l'une des revendications précédentes, dans lequel l'organe positionneur (12) peut être déplacé de la position de pleine charge (VL), au-delà de la position de marche à vide (LL), à une position d'arrêt (ST), caractérisé par le fait qu'un cylindre de butée (11) est prévu qui, en cas de sollicitation par au moins une pression d'inversion, prend une position autorisant un mouvement de l'organe positionneur (12) à la position d'arrêt (ST) et fixe par ailleurs la position de marche à vide (LL) de celui-ci.

10. Dispositif selon revendication 9, dans lequel la pression d'inversion est plus élevée que la pression de course de réglage et le cylindre de réglage (15) est conçu-réalisé de manière à accomplir une course excédant la course de réglage lorsqu'il est sollicité par la pression d'inversion, et amène alors, par variation de longueur de la tringlerie (13, 18), l'organe positionneur (12) à la position d'arrêt (ST), caractérisé par le fait qu'il est prévu une vanne de freinage de moteur (8) reliée au cylindre de butée (11) et au cylindre de réglage (15), vanne par laquelle le cylindre de butée (11) et, parallèlement au dispositif de vanne (17), le cylindre de réglage (15) sont aptes à être sollicités par au moins la pression d'inversion.

11. Dispositif selon les revendications 2 et 10, dans lequel la vanne de freinage de moteur (8) est actionnable électriquement, caractérisé par le fait que l'électronique est reliée à la vanne de freinage de moteur (8) et est conçue-réalisée de manière à activer la vanne de freinage de moteur (8) si le signal de commande maximal n'élimine pas un dépassement de la vitesse de déplacement maximale admissible.

12. Dispositif selon la revendication 11, caractérisé par le fait que le signal pour l'actionnement électrique de la vanne de freinage (8) est amené à passer par l'électronique (3).

13. Dispositif selon l'une des revendications 11 ou 12, caractérisé par le fait que l'électronique (3) est conçue-réalisée de manière à inactiver la vanne de freinage de moteur (8) en cas de fonctionnement de l'antiblocage.

14. Dispositif selon revendication 9, caractérisé par le fait que le dispositif de vanne (17) peut être relié au cylindre de butée (11) par l'intermédiaire d'une vanne d'inversion (32) commandée par pression,
par le fait que dans le cas où elle est sollicitée par au moins la pression d'inversion, la vanne d'inversion (32) ouvre la communication entre dispositif de vanne (17) et cylindre de butée (11), alors que dans les autres cas elle ferme cette communication et rend alors le cylindre de butée (11) exempt de pression, et
par le fait que l'électronique (3) est conçue-réalisée de manière telle que si le signal de commande maximal n'élimine pas un dépassement de la vitesse de déplacement maximale admissible elle émet alors un signal

10

de commande pour lequel le dispositif de vanne (17) émet en tant que commande au moins la pression d'inversion.

15. Dispositif selon revendication 9, <u>caractérisé</u> par le fait que le dispositif de vanne (17) est relié au cylindre de butée (11),

par le fait que le cylindre de butée (11) possède une pression de réponse au niveau de la pression d'inversion et

par le fait que l'électronique (3) est conçue-réalisée de manière que si le signal de commande maximal n'élimine pas un dépassement de la vitesse de déplacement maximale admissible, elle émet alors un signal de commande pour lequel le dispositif de vanne (17) émet en tant que commande au moins la pression d'inversion.

16. Dispositif selon l'une des revendications 14 ou 15, <u>caractérisé</u> par le tait que l'électronique (3) est précédée par un dispositif de commutation (30) monté en série, dont l'actionnement a pour effet que l'électronique (3) émet le signal de commande pour lequel le dispositif de vanne (17) émet en tant que commande au moins la pression d'inversion.

17. Dispositif selon revendication 2 et l'une des revendications 14 à 16, <u>caractérisé</u> par le fait que l'électronique (3) est conçue-réalisée de manière que lors du fonctionnement de l'antiblocage elle abaisse le signal de commande en dessous de la valeur correspondant à la pression d'inversion.

18. Dispositif selon revendication 13, <u>caractérisé</u> par le fait que l'électronique (3) est conçue-réalisée de manière qu'après la fin d'un fonctionnement de l'antiblocage, avant la réactivation de la vanne de freinage de moteur (8) activée avant le fonctionnement de l'antiblocage, elle n'émet au cours d'une première étape qu'un signal de commande suffisant pour mouvoir l'organe positionneur (12) à la position de marche à vide (LL).

19. Dispositif selon revendication 17, <u>caractérisé</u> par le fait que l'électronique (3) est conçue-réalisée de manière qu'après la fin du fonctionnement de l'antiblocage elle remonte par étapes la pression de commande à la valeur correspondant au moins à la pression d'inversion, en n'émettant, au cours d'une première étape, qu'un signal de commande suffisant pour mouvoir l'organe positionneur (12) à la position de marche à vide (LL).

20. Dispositif selon revendication 9, dans lequel la pression d'inversion est supérieure à la pression de course de réglage et le cylindre de réglage (15) est conçu-réalisé de manière à exécuter une course allant au-delà de la course de réglage lorsqu'il est sollicité par la pression d'inversion, et à amener alors, par variation de longueur de la tringlerie (13, 18), l'organe positionneur à la position d'arrêt (ST), <u>caractérisé</u> par le fait qu'il est prévu une vanne de freinage de moteur (8) actionnable électriquement, reliée au cylindre de butée (11), par laquelle le cylindre de butée (11) peut être sollicité par au moins la pression d'inversion,

par le fait qu'il est prévu un manocontacteur (40) électriquement monté en série et en amont par rapport à la vanne de freinage de moteur (2), surveillant la pression du cylindre de réglage (15) et commutant pour la pression d'inversion,

et par le fait que l'électronique (3) est conçue-réalisée de manière que si le signal de commande maximal n'élimine par un dépassement de la vitesse de déplacement maximale admissible, elle émet alors un signal de commande pour lequel le dispositif de vanne (17) émet en tant que commande au moins la pression d'inversion.

21. Dispositif selon revendication 20, <u>caractérisé</u> par le fait que l'électronique (3) est montée en série avec un dispositif de commutation (30) disposé en amont, dont l'actionnement a pour effet que l'électronique (3) émet le signal de commande pour lequel le dispositif de vanne (17) émet en tant que commande au moins la pression d'inversion.

22. Dispositif selon la revendication 2 et l'une des revendications 20 à 21, <u>caractérisé</u> par le fait que l'électronique (3) est conçue-réalisée de manière que, lors du fonctionnement de l'antiblocage, elle abaisse le signal de commande en dessous de la valeur correspondant à la pression d'inversion.

23. Dispositif selon revendication 22, <u>caractérisé</u> par la fait que l'électronique (3) est conçue-réalisée de manière qu'après la fin du fonctionnement de l'antiblocage elle remonte la pression de commande à la valeur correspondant au moins à la pression d'inversion, en n'émettant dans une première étape qu'un signal de commande suffisant pour mouvoir l'organe positionneur (12) à la position de marche à vide (LL).

FIG. I

FIG. 2

EP 0 346 592 B1

FIG. 3

EP 0 346 592 B1

FIG. 4

VL LL ST